# EUROPÄISCHE PATENTANMELDUNG

(11) **EP 1 463 293 A2**
(43) Veröffentlichungstag der Anmeldung: **29.09.2004**
(21) Anmeldenummer: 04004777.1
(22) Anmeldetag: 02.03.2004
(51) Int. Cl.: H04N 1/21

(54) **Digitalkamera**

(30) Priorität: 06.03.2003 DE 10310993
(71) Anmelder: plawa-feinwerktechnik GmbH & Co. KG, 73066 Uhingen (DE)
(72) Erfinder: Roessler, Michael, 73061 - Ebersbach (DE); Sevilla Casbas, Miguel, 50003 - Zaragoza (ES)
(74) Vertreter: Steil, Christian, Dipl.-Ing.

(57) **Zusammenfassung**

Es wird vorgeschlagen eine Digitalkamera (10) mit
- einem Gehäuse (12);
- einem an dem Gehäuse (12) gelagerten Objektiv (14) zum Abbilden eines Motivs (30) entlang einer optischen Achse (15);
- einem digitalen Bildsensor (16), auf dem das Motiv (30) mittels des Objektivs (14) abgebildet wird; und
- einer digitalen Anzeigeeinrichtung (20), auf der das von dem digitalen Bildsensor (16) erfasste Motiv (30) dargestellt wird.

Dabei ist das Gehäuse (12) insgesamt länglich ausgebildet, wobei das Objektiv (14) an dem vorderen Ende des länglichen Gehäuses (12) angeordnet ist und wobei die digitale Anzeigeeinrichtung (20) an dem hinteren Ende des länglichen Gehäuses (12) angeordnet ist.

## Beschreibung

Die vorliegende Erfindung betrifft eine Digitalkamera mit einem Gehäuse, einem an dem Gehäuse gelagerten Objektiv zum Abbilden eines Motivs entlang einer optischen Achse, einem digitalen Bildsensor, auf den das Motiv mittels des Objektivs abgebildet wird, und einer digitalen Anzeigeeinrichtung, auf der das von dem digitalen Bildsensor erfasste Motiv dargestellt wird.

Derartige Digitalkameras sind allgemein bekannt. Sie weisen in der Regel eine Steuereinrichtung auf, die mit dem digitalen Bildsensor und der digitalen Anzeigeeinrichtung verbunden ist, um aus dem digitalen Bildsensor Motivdaten auszulesen und die Motivdaten der digitalen Anzeigeeinrichtung zur Anzeige zuzuführen.

Generell unterscheidet man bei den Digitalkameras Spiegelreflexkameras, Kompaktkameras und Kleinkameras.

Spiegelreflexkameras weisen ein Gehäuse wie herkömmliche Spiegelreflexkameras auf. Ein Bildsensor ist unmittelbar hinter einem auswechselbaren Objektiv angeordnet. Parallel hierzu versetzt ist ein optischer Sucher vorgesehen, der über einen Strahlengang mit wenigstens einem wegklappbaren Spiegel durch das Objektiv hindurch sieht. Hierdurch wird erreicht, dass das durch den Sucher gesehene Motiv immer exakt dem beim Auslösen aufgenommenen Motiv entspricht.

Kompaktkameras weisen in der Regel ein etwa quaderförmiges Gehäuse auf, dessen Breite deutlich größer ist als dessen Tiefe in Richtung der optischen Achse des Objektivs. Parallel zu der optischen Achse ist in der Regel ein optischer Hilfssucher vorgesehen, der sich von der Rückwand bis zur Vorderwand des Gehäuses erstreckt. Aufgrund der Parallaxe zwischen der optischen Achse des Suchers und der optischen Achse des Objektivs kann der optische Sucher das Motiv nur angenähert darstellen.

Sowohl digitale Spiegelreflexkameras als auch digitale Kompaktkameras weisen in der Regel zusätzlich zu dem optischen Sucher an der Rückseite des Gehäuses eine digitale Anzeigeeinrichtung auf. Diese Anzeigeeinrichtung zeigt jeweils aktuell das von dem digitalen Bildsensor erfasste Motiv, von einem kleinen zeitlichen Versatz abgesehen, der erforderlich ist, um die Bilddaten aus dem digitalen Bildspeicher auszulesen und über die Steuereinrichtung der digitalen Anzeigeeinrichtung zuzuführen.

Diese Kameras weisen folglich sowohl einen optischen Sucher als auch einen "digitalen" Sucher auf, die alternativ wahlweise benutzt werden können.

Bei den eingangs erwähnten Kleinkameras ist aus Kostengründen häufig nur ein optischer Sucher vorgesehen und kein "digitaler" Sucher. Die Gehäuseformen bei derartigen Kleinkameras sind vielfältig. Es gibt sowohl miniaturisierte Kleinkameras, deren Gehäuseform generell denen von Kompaktkameras ähnelt, bei deutlich kleineren Abmessungen. Ferner gibt es Kleinkameras mit einem länglichen Gehäuse, bei denen ein optischer Sucher und ein Objektiv parallel zueinander versetzt in einem oberen Bereich des Gehäuses angeordnet sind. Sowohl die optische Achse des Suchers als jene des Objektivs erstrecken sich bei diesem Kleinkameratyp in einer Richtung senkrecht zur Längserstreckung des länglichen Gehäuses.

Digitale Spiegelreflexkameras sind vergleichsweise schwer und in der Regel nur mit beiden Händen zu handhaben. Kompaktkameras mit einem quaderförmigen Gehäuse sind in der Regel leichter, aber dennoch vergleichsweise sperrig zu transportieren. Auch ist häufig eine einhändige Bedienung nicht möglich.

Die Kleinkameras ohne digitale Anzeigeeinrichtung weisen in der Regel nur eine sehr geringe Auflösung und daher unterlegene Bildqualität auf.

Es ist demzufolge die Aufgabe der vorliegenden Erfindung, eine Digitalkamera anzugeben, die leicht handhabbar und bedienbar ist und ein möglichst kompaktes, leicht zu transportierendes Gehäuse aufweist.

Diese Aufgabe wird bei der eingangs genannten Digitalkamera dadurch gelöst, dass das Gehäuse insgesamt länglich parallel zu der optischen Achse ausgebildet ist, wobei das Objektiv an dem vorderen Ende des länglichen Gehäuses angeordnet ist und wobei die digitale Anzeigeeinrichtung an dem hinteren Ende des länglichen Gehäuses angeordnet ist.

Durch diese Anordnung wird erreicht, dass die Digitalkamera in ihrer Handhabung dem eines Fernrohrs ähnelt. Das Gehäuse ist dabei so dimensioniert, dass es sich in einer Hand halten lässt. Durch die längliche Ausbildung des Gehäuses ergibt sich eine leicht zu transportierende und handzuhabende Form. Die Hand kann das Gehäuse dabei wie ein Fernrohr umschließen. Die Bedienperson sieht dabei das von dem digitalen Bildsensor am vorderen Ende erfasste Motiv auf der digitalen Anzeigeeinrichtung am hinteren Ende des Gehäuses. Die Digitalkamera ist daher leicht auf gewünschte Motive auszurichten.

Die Aufgabe wird somit vollkommen gelöst.

Bei einer besonders bevorzugten Ausführungsform weist die Digitalkamera eine Steuereinrichtung auf, die mit dem digitalen Bildsensor und der digitalen Anzeigeeinrichtung verbunden ist, um aus dem digitalen Bildsensor Motivdaten auszulesen und die Motivdaten der digitalen Anzeigeeinrichtung zur Anzeige zuzuführen, wobei die Steuereinrichtung in dem Gehäuse zwischen dem digitalen Bildsensor und der digitalen Anzeigeeinrichtung angeordnet ist.

Auf diese Weise wird der von dem länglichen Gehäuse bereitgestellte Bauraum optimal ausgenutzt.

Dabei ist es von besonderem Vorzug, wenn das Objektiv, der digitale Bildsensor, die Steuereinrichtung und die digitale Anzeigeeinrichtung parallel zu der optischen Achse hintereinander in dem Gehäuse angeordnet sind.

Durch diese Anordnung ergibt sich insgesamt ein geradliniger Aufbau. Ferner ist die Verkabelung zwischen den Einzelkomponenten, insbesondere zwischen dem digitalen Bildsensor und der Steuereinrichtung einerseits und der digitalen Anzeigeeinrichtung und der Steuereinrichtung andererseits vereinfacht.

Soweit im vorliegenden Zusammenhang von einer Anordnung parallel zu der optischen Achse gesprochen wird, ist hiermit insbesondere eine Anordnung generell entlang der optischen Achse gemeint. Dabei können einzelne Komponenten etwas gegenüber der optischen Achse versetzt angeordnet sein, um den Bauraum besser auszunutzen.

Insgesamt ist es von besonderem Vorteil, wenn die digitale Anzeigeeinrichtung eine Flüssigkristallanzeige und eine Optik zum Vergrößern des auf der Flüssigkristallanzeige angezeigten Motivs aufweist.

Derartige digitale Anzeigeeinrichtungen sind beispielsweise unter der Bezeichnung "CyberDisplay" von der Firma Kopin Corp., Thaunton, MA, USA, verfügbar.

Diese Anzeigeeinrichtungen bauen besonders kompakt und weisen ein geringes Gewicht auf. Dennoch ist eine hohe Pixeldichte möglich. Um diese Anzeigeeinrichtung gut betrachten zu können, wird in der Regel eine Optik zugeordnet, um das von der Anzeigeeinrichtung angezeigte Bild optisch zu vergrößern.

Von besonderem Vorzug ist es dabei, wenn die Optik fokussierbar ist und wenn an dem hinteren Ende des Gehäuses eine von außen betätigbare Stelleinrichtung zum Fokussieren der Optik vorgesehen ist.

Gemäß einer weiteren besonders bevorzugten Ausführungsform füllt die digitale Anzeigeeinrichtung die hintere Stirnseite des Gehäuses im Wesentlichen vollständig aus.

Hierdurch wird erreicht, dass das Gehäuse im Querschnitt sehr kleine Abmessungen aufweist.

Ferner ist es von Vorzug, wenn die Steuereinrichtung eine Schnittstelle für ein auswechselbares Speichermedium aufweist und wenn das Gehäuse eine Öffnung zum Auswechseln des Speichermediums aufweist.

Hierdurch können die Motivdaten auf dem Speichermedium aufgezeichnet werden. Das weitere Verarbeiten dieser Motivdaten, zum Beispiel Anzeigen auf einem PC oder Ausdrucken, kann über ein geeignetes Lesegerät des Speichermediums erfolgen. Es ist nicht notwendig, die Kamera selbst an dem PC anzuschließen, um die Motivdaten auszulesen.

Bei dem Speichermedium kann es sich um herkömmliche Speicherkarten wie MM-Karten, SD-Karten, XD-Karten oder ähnliches handeln.

Von besonderem Vorzug ist es, wenn die Öffnung mittels eines Deckels verschließbar ist.

Hierdurch wird das Speichermedium und insbesondere die Schnittstelle zwischen Speichermedium und Steuereinrichtung geschützt. Unter demselben Deckel kann ferner ein Fach oder Fächer für eine Batterie bzw. mehrere Batterien vorgesehen sein. Vorzugsweise ist jedoch eine wiederaufladbare Batterie fest im Gehäuse eingebaut und wird über eine Schnittstelle geladen, z.B. mittels eines externen Ladegerätes.

Gemäß einer weiteren bevorzugten Ausführungsform ist ein ausfahrbarer Blitz vorgesehen, der in einem eingefahrenen Zustand im Bereich zwischen dem Objektiv und dem digitalen Bildsensor versetzt gegenüber der optischen Achse angeordnet ist.

Dies ermöglicht zum einen, dass der Blitz möglichst weit vorne am Gehäuse angeordnet ist, so dass die volle Lichtleistung des Blitzes für die Ausleuchtung des Motivs zur Verfügung steht. Zum anderen wird der vorhandene Bauraum geschickt genutzt, da der Blitz in dem Bereich des Gehäuses angeordnet werden kann, der von dem Strahlengang zwischen Objektiv und Bildsensor nicht benötigt wird.

Gemäß einer besonders bevorzugten Ausführungsform ist der Blitz um eine Achse verschwenkbar, die in einer Richtung quer zur optischen Achse versetzt gegenüber dem digitalen Bildsensor angeordnet ist.

Hierdurch wird erreicht, dass die Mechanik zum Herausfahren des Blitzes möglichst weit entfernt von dem Strahlengang angeordnet ist, so dass sich eine hohe Bauraumausnutzung ergibt.

Gemäß einer weiteren bevorzugten Ausführungsform weist das Gehäuse an seiner vorderen Stirnseite seitlich neben dem Objektiv einen Entfernungssensor auf.

Bei dem Entfernungssensor kann es sich um einen herkömmlichen Infrarotsensor oder ähnliches handeln.

Dabei ist die vordere Stirnseite des Gehäuses etwa elliptisch, rechteckig oder tropfenförmig ausgebildet. Ein Großteil der Stirnseite wird von dem Objektiv eingenommen und der in der Regel etwas kleinere Entfernungssensor ist daneben angeordnet. Die Stirnseite ist dabei bevorzugt an einer Seite vollständig von dem Objektiv ausgefüllt. Die in der Regel etwas kleinere Entfernungsmesseinrichtung ist daneben angeordnet, so dass sich der Gehäusequerschnitt in diesem Bereich etwas verjüngen kann.

Da in der Regel auch die digitale Anzeigeeinrichtung ein etwa rechteckiges Format aufweist, kann das Gehäuse bei dieser Ausführungsform im Querschnitt durchgängig entweder rechteckig oder elliptisch ausgebildet sein. Es ergibt sich dabei vorzugsweise insgesamt etwa die Form eines über die Längsseite abgeflachten Zylinders.

Gemäß einer weiteren insgesamt bevorzugten Ausführungsform ist wenigstens ein Bedienungselement an dem Gehäuse, wie zum Beispiel ein Auslöser und/oder Zoomtasten zum Verstellen der Brennweite des Objektivs, an einer Oberseite des Gehäuses in einem hinteren Bereich angeordnet, derart, dass das Bedienungselement beim Umgreifen des Gehäuses mit einer einzelnen Hand von dem Zeigefinger und/oder dem Mittelfinger bedienbar ist.

Durch diese Maßnahme ergibt sich eine besonders gute Handhabbarkeit. Die Kamera ist während der Motivsuche und des Auslösens mit einer einzelnen Hand zu bedienen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Seitenschnittansicht einer Digitalkamera gemäß einer ersten Ausführungsform der Erfindung;
- Fig. 2: eine Draufsicht auf die Digitalkamera der Fig. 1;
- Fig. 3: eine Seitenansicht einer Digitalkamera gemäß einer zweiten Ausführungsform der Erfindung;
- Fig. 4: eine Draufsicht auf die Digitalkamera der Fig. 3;
- Fig. 5: eine Ansicht der Digitalkamera der Fig. 3 und 4 von der anderen Seite;
- Fig. 6: eine Ansicht der Digitalkamera der Fig. 3 bis 5 von unten;
- Fig. 7: eine Ansicht der Digitalkamera der Fig. 3 bis 6 von vorne;
- Fig. 8: eine Ansicht der Digitalkamera der Fig. 3 bis 7 von hinten;
- Fig. 9: eine der Fig. 7 entsprechende Darstellung mit ausgefahrenem Blitz;
- Fig. 10: eine Ansicht der Digitalkamera der Fig. 3 bis 9 in einer Stativhalterung von vorne; und
- Fig. 11: eine Darstellung der Digitalkamera in der Stativhalterung von der Seite, mit angeschlossenem PC.

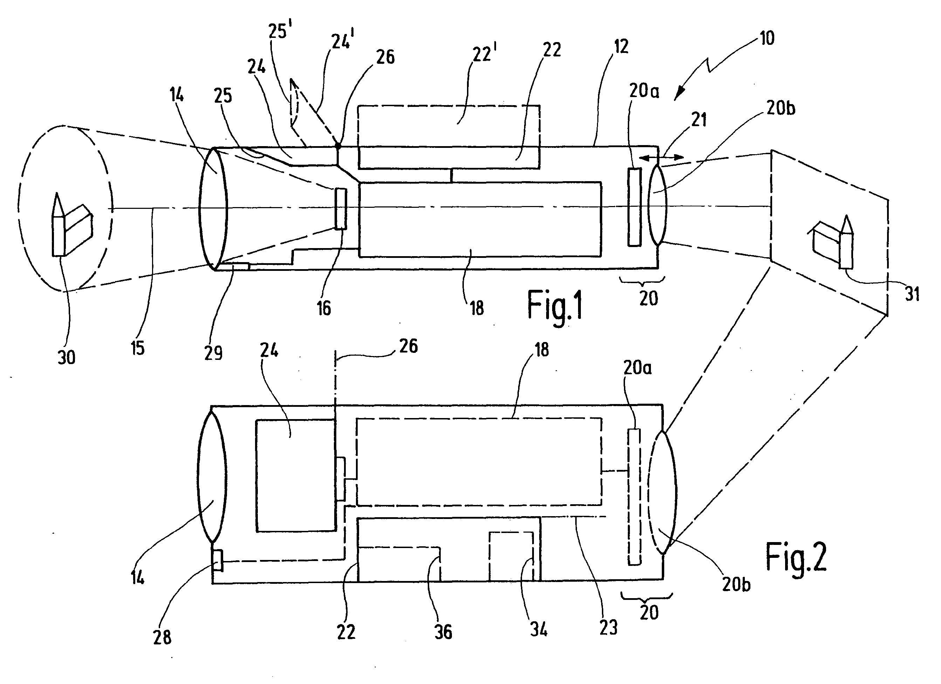

In den Fig. 1 und 2 ist eine erste Ausführungsform einer erfindungsgemäßen Digitalkamera generell mit 10 bezeichnet.

Die Digitalkamera 10 weist ein längliches Gehäuse 12 auf. An einem vorderen Ende des Gehäuses 12 ist ein Objektiv 14 vorgesehen, das eine optische Achse 15 definiert. Das Objektiv 14 ist in Fig. 1 schematisch als eine Linse dargestellt, obgleich es in der Regel durch eine Kombination von Linsen gebildet ist. Ferner kann es sich bei dem Objektiv 14 sowohl um ein Objektiv mit fester Brennweite als auch um ein solches mit veränderlicher Brennweite (Zoom-Objektiv) handeln.

Das Gehäuse 12 ist der Länge nach generell mit der optischen Achse 15 ausgerichtet.

In einem vorderen Teil des Gehäuses 12, hinter dem Objektiv 14, ist ein digitaler Bildsensor 16 vorgesehen, der beispielsweise durch ein CCD-Element gebildet sein kann. Der digitale Bildsensor 16 ist von der Querschnittsfläche her kleiner als das Objektiv 14, so dass sich ein etwa konischer Strahlengang von dem Objektiv 14 auf den digitalen Bildsensor 16 ergibt.

Entlang bzw. parallel zur optischen Achse 15 ist hinter dem digitalen Bildsensor 16 eine Steuereinrichtung 18 angeordnet. An dem hinteren Ende des Gehäuses 12 ist eine digitale Anzeigeeinrichtung 20 vorgesehen.

Der digitale Bildsensor 16 und die digitale Anzeigeeinrichtung 20 sind mit der Steuereinrichtung 18 verbunden. Die Steuereinrichtung 18 dient dazu, digitale Motivdaten aus dem Bildsensor 16 auszulesen und zur Anzeige an die digitale Anzeigeeinrichtung 20 zu geben.

Die digitale Anzeigeeinrichtung 20 ist fokussierbar, wie es schematisch bei 21 dargestellt ist.

Die Anzeigeeinrichtung 20 weist eine Flüssigkristallanzeige 20a und eine dahinter angeordnete Optik 20b auf. Die Optik 20b dient zum Vergrößern der Darstellung der Flüssigkristallanzeige 20a. Anstelle einer Flüssigkristallanzeige können auch andere digitale Anzeigevorrichtungen verwendet werden. Das Fokussieren der Anzeigeeinrichtung 20 erfolgt durch Bewegen der Optik 20 in einer Richtung parallel zu der optischen Achse 15, wie es bei 21 gezeigt ist.

An der Oberseite des Gehäuses 12 ist eine Klappe 22 vorgesehen, hinter der sich eine Schnittstelle für ein auswechselbares Speichermedium wie eine MM-, XD- oder SD-Karte befindet. Ferner kann sich hinter der Klappe ein Batteriefach zur Aufnahme einer Batterie zur Stromversorgung der Digitalkamera 10 befinden. In der Regel ist eine wiederaufladbare Batterie mit langer Lebensdauer fest im Gehäuse eingebaut und wird über ein externes Ladegerät geladen.

Die Klappe 22 ist entlang einer Achse 23 aufklappbar, um so auf eine zu diesem Zweck vorgesehene Öffnung in dem Gehäuse 12 zugreifen zu können. Die Achse 23 ist parallel zu der optischen Achse 15 ausgerichtet.

An der Oberseite des Gehäuses 12, etwa in einem Bereich zwischen dem Objektiv 14 und dem digitalen Bildsensor 16, ist ein ausfahrbarer Blitz 24 vorgesehen. Die Blitzfläche ist mit 25 bezeichnet.

Der Blitz ist entlang einer Achse 26 herausschwenkbar, wie es schematisch in Fig. 1 bei 24' bzw. 25' gezeigt ist. Die Achse 26 verläuft quer zur optischen Achse 15.

Der Blitz 24 ist innerhalb eines Bereiches des Gehäuses 12 zwischen dem Objektiv 14 und dem digitalen Bildsensor 16 vorgesehen, der nicht von dem Strahlengang eingenommen ist. Der Blitz 24 ist ferner mit der Steuereinrichtung 18 verbunden.

Bei 29 ist in schematischer Form ein Fokusmotor 29 gezeigt, der dazu ausgelegt ist, das Objektiv 14 auf eine gewünschte Entfernung zu fokussieren. Der Fokusmotor 29 wird dabei mittels der Steuereinrichtung 18 in Abhängigkeit von den Daten angesteuert, die von dem digitalen Entfernungsmesser 28 ermittelt werden. Alternativ kann das Objektiv auch manuell fokussierbar sein, so dass ggf. auch auf einen Entfernungsmesser verzichtet werden kann.

Der Blitz 24 ist normalerweise bündig in dem Gehäuse 12 aufgenommen. Er kann bei einer Ausführungsform manuell herausgeschwenkt werden. Alternativ ist es auch möglich, über den digitalen Bildsensor 16 zu ermitteln, ob die Helligkeitsverhältnisse die Benutzung des Blitzes 24 erfordern. In diesem Fall kann der Blitz 24 automatisch herausschwenken, beispielsweise federunterstützt.

An der Vorderseite des Gehäuses 12 ist ein Entfernungsmesser 28, beispielsweise ein Infrarot-Entfernungsmesser, vorgesehen. Auch dieser ist mit der Steuereinrichtung 18 verbunden.

Die Entfernung zu dem gewünschten Motiv kann automatisch mittels des Entfernungsmessers 28 ermittelt werden. Die Steuereinrichtung 18 steuert dann den Motor 29 an, um das Objektiv 14 geeignet zu fokussieren.

Die Form des Gehäuses 12 ist generell länglich quaderförmig, wobei die Längsachse des Gehäuses 12 mit der optischen Achse 15 ausgerichtet bzw. parallel hierzu ist. Der Querschnitt des Gehäuses 12 ist im Wesentlichen durch die Fläche des Objektivs 14 sowie die Fläche der Anzeigeeinrichtung 20 bestimmt.

In dem Gehäuse 12 sind folglich das Objektiv 14, der digitale Bildsensor 16, die Steuereinrichtung 18 und die digitale Anzeigeeinrichtung 20 entlang der optischen Achse 15 hintereinander angeordnet. Die Digitalkamera 10 weist keinen optischen Sucher auf. Insgesamt ergibt sich so ein fernrohrartiges Erscheinungsbild.

Im Betrieb wird ein Motiv 30 über das Objektiv 14 auf den digitalen Bildsensor 16 projiziert. Die in dem digitalen Bildsensor 16 erzeugten Motivdaten werden in Echtzeit an die Steuereinrichtung 18 übergeben. Die Steuereinrichtung 18 übergibt die Motivdaten in Echtzeit an die Anzeigeeinrichtung 20, auf der das Motiv angezeigt wird, wie es schematisch bei 31 gezeigt ist.

Das Gehäuse 12 ist von der Größe her so bemessen, dass es generell in einer Hand gehalten werden kann. Beispielsweise kann die Länge des Gehäuses 12 im Bereich zwischen etwa 50 mm und 250 mm liegen, insbesondere im Bereich von etwa 100 mm bis 180 mm. Die Breite kann im Bereich zwischen 10 und 80 mm liegen, insbesondere zwischen 15 mm und 50 mm. Die Höhe kann beispielsweise im Bereich zwischen 10 mm und 60 mm liegen, insbesondere im Bereich zwischen 15 mm und 40 mm. Das Verhältnis von Länge zu Blitz und das Verhältnis von Länge zu Höhe beträgt jeweils wenigstens 3 : 1.

Das Gehäuse 12 kann folglich gut in einer Hand gehalten werden. Es kann, nach der Art eines Fernrohrs, auf ein gewünschtes Motiv gerichtet werden. Die Bedienperson kann das Motiv an der Rückseite des Gehäuses 12 über die Anzeigeeinrichtung 20 betrachten. Ein Auslöser ist vorzugsweise an der Oberseite vorgesehen, kann aber auch an der Unterseite oder an einer der Seitenflächen des Gehäuses 12 vorgesehen sein.

Die Digitalkamera 10 eignet sich in erster Linie zum Aufnehmen von Einzelbildern. Die Digitalkamera 10 kann jedoch auch zum Aufnehmen von Filmsequenzen geeignet sein. Dies ist im Wesentlichen eine Frage der Größe des Speichermediums.

In Fig. 2 ist bei 34 in schematischer Weise ein derartiges Speichermedium dargestellt. Bei 36 ist schematisch ein Batteriefach zum Einlegen einer Batterie gezeigt.

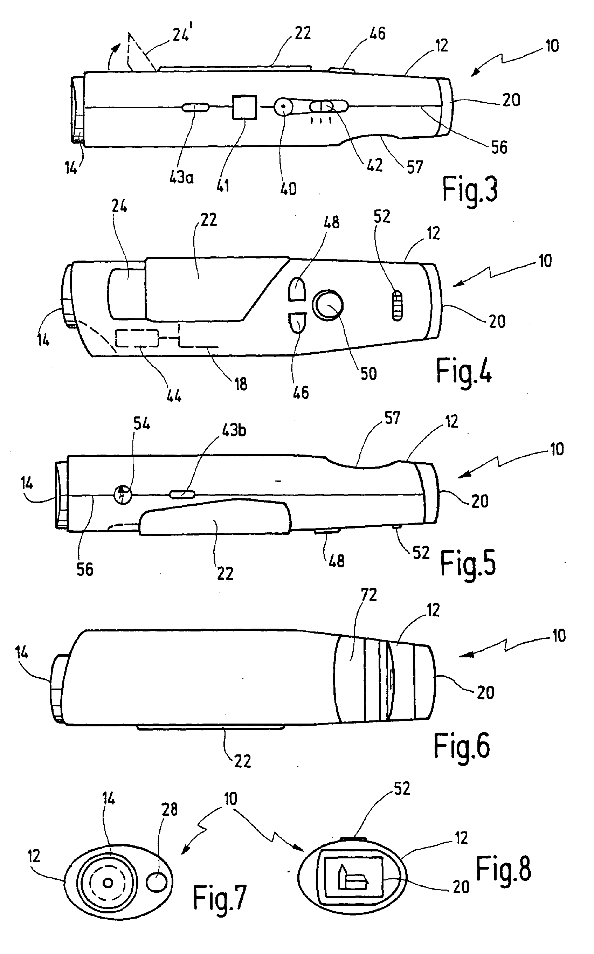

In den Fig. 3 bis 9 ist eine weitere Ausführungsform der erfindungsgemäßen Digitalkamera dargestellt. Gleiche Elemente sind mit gleichen Bezugsziffern versehen. Ferner entspricht die generelle Funktionsweise der Digitalkamera der Fig. 3 bis 9 jener der Fig. 1 und 2. Im Folgen wird daher im Wesentlichen nur auf die Unterschiede zu jener Ausführungsform eingegangen.

Das Gehäuse 12 weist an einer Seite einen Ein/Aus-Schalter 40 auf. In unmittelbarer Nachbarschaft hierzu ist ein Moduswahlschalter 42 vorgesehen, mit dem sich unterschiedliche Betriebsarten der Digitalkamera 10 einstellen lassen.

Bei 41 ist eine verschließbare Schnittstelle zu einem PC vorgesehen (beispielsweise in Form einer USB-, Firewise- oder Bluetooth-Schnittstelle).

Ferner sind an gegenüberliegenden Seiten des Gehäuses 12 Ausnehmungen 43a, 43b vorgesehen, an denen sich die Digitalkamera 10 an einer Halterung bzw. einem Stativ einrasten lässt.

Bei 44 ist in schematischer Form ein Motor zum Verstellen der Brennweite des Objektivs 14 vorgesehen, die mit der Steuereinrichtung 18 verbunden ist.

An der Oberseite des Gehäuses 12 sind zwei Zoomtasten 46, 48 zum Verändern der Brennweite des Objektivs 14 angeordnet. In ummittelbarer Nähe hierzu ist ein Auslöser 50 an der Oberseite des Gehäuses 12 angeordnet. Die Zoomtasten 46, 48 und der Auslöser 50 sind so angeordnet, dass sie sich vom Zeigefinger oder Mittelfinger bedienen lassen, wenn die Digitalkamera 10 in einer Hand gehalten wird. Anstelle einer motorischen Brennweitenverstellung kann jedoch auch ein Objektiv vorgesehen sein, dessen Brennweite manuell verstellbar ist (z.B. durch manuelles Drehen oder axiales Verschieben des Objektivs).

Zwischen dem Auslöser 50 und der digitalen Anzeigeeinrichtung 20 ist an der Oberseite des Gehäuses 12 ein Rad 52 zur Fokuseinstellung der digitalen Anzeigeeinrichtung 20 angeordnet.

An der dem Ein/Aus-Schalter 40 gegenüberliegenden Seite des Gehäuses 12 ist eine Blitztaste 54 vorgesehen, mit der sich der Blitz 24 herausschwenken lässt, wie es schematisch in Fig. 3 bei 24' gezeigt ist.

Das Gehäuse 12 ist zweigeteilt, mit einer Oberseite und einer Unterseite, die annähernd symmetrisch zueinander ausgebildet sind. Eine entsprechende Teilungslinie, die an den Seiten des Gehäuses 12 entlang läuft, ist in den Fig. 3 und 5 bei 56 gezeigt.

Der Ein/Aus-Schalter 40, der Moduswahlschalter 42 und der Blitzschalter 54 sind im Bereich der Teilungslinie 56 angeordnet. Gleiches gilt für die Ausnehmungen 43a, 43b.

Bei 57 ist gezeigt, dass das Gehäuse 12 an der Unterseite eine Daumenvertiefung aufweist, um die Ergonomie und die Sicherheit des Halts der Digitalkamera 10 in der Hand zu verbessern.)

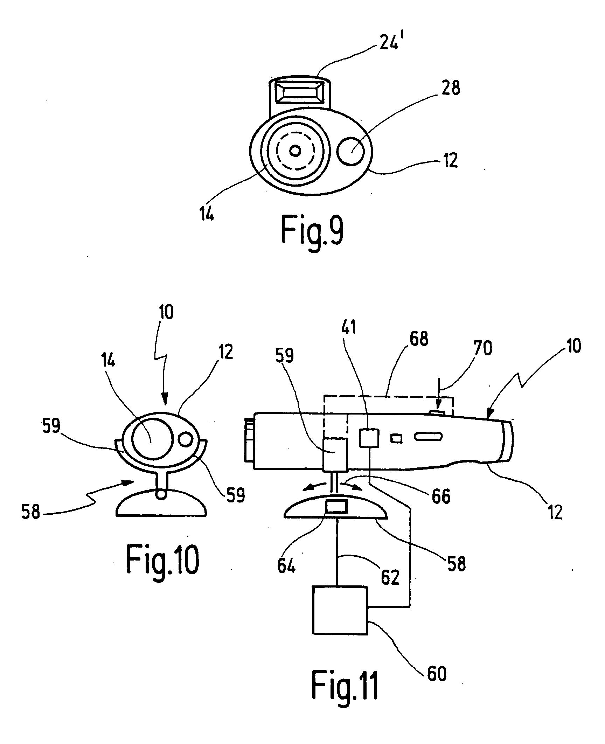

In Fig. 9 ist die Digitalkamera 10 von der Vorderseite mit ausgefahrenem Blitz 24' dargestellt.

In Fig. 10 ist die Digitalkamera 10 in einer Halterung 58 aufgenommen, die zwei Arme 59 aufweist, die das Gehäuse 12 von unten umgreifen. An dem vorderen Ende der Arme 59 sind auf das Gehäuse 12 zuweisende Vorsprünge (nicht gezeigt) vorgesehen, die in die Ausnehmungen 43a, 43b greifen. Da die Ausnehmungen 43a, 43b länglich ausgebildet sind, kann die Digitalkamera 10 folglich sicher an der Halterung 58 eingerastet werden.

Die Halterung 58 dient dazu, die Digitalkamera 10 in einer gewünschten Position zu fixieren, ähnlich einem Stativ. Beispielsweise kann die Halterung 58 auf einem Monitor eines PCs angeordnet werden, so dass die Digitalkamera 10 als Kameraeingang für Bildetelephonie oder ähnliches verwendbar ist. Zu diesem Zweck ist es möglich, die Digitalkamera 10 in einen Modus zu schalten, bei dem ständig Motivdaten ausgelesen werden.

In Fig. 11 ist die Digitalkamera 10 wiederum befestigt in einer Halterung 58 dargestellt. Die Halterung 58 entspricht dem mechanischen Aufbau der Halterung 58 der Fig. 10.

Bei der Ausführungsform in Fig. 11 weist die Halterung 58 zusätzlich einen Motor 64 auf, um die Kamera 10 zu verschwenken, wie es schematisch bei 66 gezeigt ist.

Der Motor 64 ist über eine Schnittstelle 62 mit einem PC oder einer sonstigen Datenverarbeitungseinrichtung 60 verbindbar, so dass die Ausrichtung der Kamera 10 in Bezug auf den Fuß des Halters 58 durch den PC 60 gesteuert werden kann. Hierdurch kann die Digitalkamera 10 als Überwachungskamera eingesetzt werden.

Ferner ist gezeigt, dass die Digitalkamera 10 mit dem PC 60 über die Schnittstelle 41 verbunden ist, so dass die von der Digitalkamera 10 erzeugten Bild- bzw. Motivdaten an den PC 60 übermittelt werden.

Der PC 60 kann in Kombination mit der Digitalkamera 10 und der Halterung 58 als Überwachungssystem oder für sonstige multimediale Aufgaben verwendet werden, wie Bildtelephonie.

Ferner ist in Fig. 11 gezeigt, dass die Halterung 58 mit einer Erweiterung 68 versehen sein kann, um die Zoomtasten 46, 48 zu betätigen, wie es schematisch bei 70 gezeigt ist. Hierdurch kann im PC-Betrieb nicht nur die Ausrichtung der Digitalkamera 10, sondern auch deren Brennweite PC-gesteuert eingestellt werden.

Alternativ ist es auch möglich, dass die Einstellung der Brennweite über die Schnittstelle 41 erfolgt.

## Patentansprüche

1. Digitalkamera (10) mit
- einem Gehäuse (12);
- einem an dem Gehäuse (12) gelagerten Objektiv (14) zum Abbilden eines Motivs (30) entlang einer optischen Achse (15);
- einem digitalen Bildsensor (16), auf dem das Motiv (30) mittels des Objektivs (14) abgebildet wird; und
- einer digitalen Anzeigeeinrichtung (20), auf der das von dem digitalen Bildsensor (16) erfasste Motiv (30) dargestellt wird;
**dadurch gekennzeichnet, dass**
das Gehäuse (12) insgesamt länglich parallel zu der optischen Achse (15) ausgebildet ist, wobei das Objektiv (14) an dem vorderen Ende des länglichen Gehäuses (12) angeordnet ist und wobei die digitale Anzeigeeinrichtung (20) an dem hinteren Ende des länglichen Gehäuses (12) angeordnet ist.

2. Digitalkamera nach Anspruch 1, **gekennzeichnet durch** eine Steuereinrichtung (18), die mit dem digitalen Bildsensor (16) und der digitalen Anzeigeeinrichtung (20) verbunden ist, um aus dem digitalen Bildsensor (16) Motivdaten auszulesen und die Motivdaten der digitalen Anzeigeeinrichtung (20) zur Anzeige zuzuführen, wobei die Steuereinrichtung (18) in dem Gehäuse (12) zwischen dem digitalen Bildsensor (16) und der digitalen Anzeigeeinrichtung (20) angeordnet ist.

3. Digitalkamera nach Anspruch 2, **dadurch gekennzeichnet, dass** das Objektiv (14), der digitale Bildsensor (16), die Steuereinrichtung (18) und die digitale Anzeigeeinrichtung (20) parallel zu der optischen Achse (15) hintereinander in dem Gehäuse (12) angeordnet sind.

4. Digitalkamera nach einem der Ansprüche 1 bis 3, **dadurch gekennzeichnet, dass** die digitale Anzeigeeinrichtung (20) eine Flüssigkristallanzeige (20a) und eine Optik (20b) zum Vergrößern des auf der Flüssigkristallanzeige (20a) angezeigten Motivs (30) aufweist.

5. Digitalkamera nach Anspruch 4, **dadurch gekennzeichnet, dass** die Optik (20b) fokussierbar ist und dass an dem hinteren Ende des Gehäuses (12) eine von außen betätigbare Stelleinrichtung (52) zum Fokussieren der Optik (20b) vorgesehen ist.

6. Digitalkamera nach einem der Ansprüche 1 bis 5, **dadurch gekennzeichnet, dass** die digitale Anzeigeeinrichtung (20) die hintere Stirnseite des Gehäuses (12) im Wesentlichen vollständig ausfüllt.

7. Digitalkamera nach einem der Ansprüche 2 bis 6, **dadurch gekennzeichnet, dass** die Steuereinrichtung (18) eine Schnittstelle für ein auswechselbares Speichermedium aufweist und dass das Gehäuse (12) eine Öffnung zum Auswechseln des Speichermediums aufweist.

8. Digitalkamera nach Anspruch 7, **dadurch gekennzeichnet, dass** die Öffnung mittels eines Deckels (22) verschließbar ist.

9. Digitalkamera nach einem der Ansprüche 1 bis 8, **dadurch gekennzeichnet, dass** ein ausfahrbarer Blitz (24) vorgesehen ist, der in einem eingefahrenen Zustand im Bereich zwischen dem Objektiv (14) und dem digitalen Bildsensor (16) versetzt gegenüber der optischen Achse (15) angeordnet ist.

10. Digitalkamera nach Anspruch 9, **dadurch gekennzeichnet, dass** der Blitz (24) um eine Achse (26) verschwenkbar ist, die in einer Richtung quer zur optischen Achse (15) versetzt gegenüber dem digitalen Bildsensor (16) angeordnet ist.

11. Digitalkamera nach einem der Ansprüche 1 bis 10, **dadurch gekennzeichnet, dass** das Gehäuse (12) an seiner vorderen Stirnseite seitlich neben dem Objektiv (14) einen Entfernungssensor (28) aufweist.

12. Digitalkamera nach einem der Ansprüche 1 bis 11, **dadurch gekennzeichnet, dass** wenigstens ein Bedienungselement (46 - 52) an dem Gehäuse (12), wie z.B. ein Auslöser (50) und/oder Zoomtasten (46, 48) zum Verstellen der Brennweite des Objektivs (14), an einer Oberseite des Gehäuses (12) in einem hinteren Bereich angeordnet ist, derart, dass das Bedienungselement (46 - 52) beim Umgreifen des Gehäuses (12) mit einer einzelnen Hand von dem Zeigefinger und/oder dem Mittelfinger bedienbar ist.
